# EUROPÄISCHE PATENTSCHRIFT

(11) **EP 3 292 316 B1**
(45) Veröffentlichungstag und Bekanntmachung des Hinweises auf die Patenterteilung: **31.10.2018**
(21) Anmeldenummer: 16712208.4
(22) Anmeldetag: 10.03.2016
(51) Int. Cl.: F16D 48/06, F16D 13/22, F16D 11/00

(54) **VERFAHREN ZUR ANSTEUERUNG EINER FORMSCHLUSSSCHALTEINHEIT**
METHOD FOR ACTUATING A POSITIVELY LOCKING SHIFTING UNIT
PROCÉDÉ DE COMMANDE D'UNE UNITÉ DE COMMUTATION À COMPLÉMENTARITÉ DE FORMES

(30) Priorität: 06.05.2015 DE 102015005803
(43) Veröffentlichungstag der Anmeldung: 14.03.2018
(73) Patentinhaber: Daimler AG, 70327 Stuttgart (DE)
(72) Erfinder: TONIUS, Nils, 70176 Stuttgart (DE); HAERTER, Tobias, 70174 Stuttgart (DE)
(74) Vertreter: JENSEN & SON
(86) Internationale Anmeldenummer: PCT/EP2016/000433
(87) Internationale Veröffentlichungsnummer: WO 2016/177441

(56) Entgegenhaltungen:
- DE-A1- 19 631 294
- DE-A1- 19 703 488
- DE-A1-102009 000 253
- DE-A1-102010 048 344
- GB-A- 486 532

## Beschreibung

Die Erfindung betrifft ein Verfahren zur Ansteuerung einer Formschlussschalteinheit und einen Kraftfahrzeugantriebsstrang mit zumindest einer Formschlussschalteinheit.
Aus der DE 883 679 ist bereits ein Verfahren zur Ansteuerung einer asymmetrischen Formschlussschalteinheit bekannt.
Aus der gattungsgemäßen DE 197 17 042 C2 ist ferner ein Verfahren zum Schließen eine Formschlussschalteinheit bekannt, bei welchem eine Synchrondrehzahl eingestellt wird
Der Erfindung liegt insbesondere die Aufgabe zugrunde, einen Schließvorgang einer asymmetrischen Formschlussschalteinheit zu verbessern. Sie wird durch ein Verfahren entsprechend dem Anspruch 1 und einen Kraftfahrzeugantriebsstrang entsprechend dem Anspruch 9 gelöst. Weiterbildungen der Erfindung ergeben sich aus den abhängigen Ansprüchen.
Erfindungsgemäß wird ein Verfahren zur Ansteuerung einer Formschlussschalteinheit vorgeschlagen, bei dem in einem Schließvorgang ein mit einer ersten Kopplungshälfte verbundenes Kopplungselement, das eine angeschrägte Kopplungsverzahnung aufweist, mit einem mit einer zweiten Kopplungshälfte verbundenem Sperrelement, das eine Sperrverzahnung aufweist, und einem mit der zweiten Kopplungshälfte verbundenen, gegenüber dem Sperrelement in Umfangsrichtung beweglichen Fangelement, das eine angeschrägte Fangverzahnung aufweist, in Eingriff gebracht wird, wobei in dem Schließvorgang der Formschlussschalteinheit ein Touchpoint eingestellt wird, der in einem Differenzdrehzahlverlauf zeitlich erst nach einem Durchgang einer Synchrondrehzahl liegt, wobei die Synchrondrehzahl einer Nulldrehzahl entspricht. Dadurch kann unter Berücksichtigung einer Kinematik eines zugrundeliegenden Getrieberadsatzes sichergestellt werden, dass eine Relativdrehbewegung zwischen den Kopplungshälften eine Drehrichtung aufweist, entlang der ein Einspuren der Sperrverzahnung in die Fangverzahnung möglich ist. Dadurch kann ein Schließvorgang verbessert werden. Insbesondere kann vermieden werden, dass die Kopplungshälften durch eine falsche Drehrichtung abgewiesen werden, wodurch ein damit verbundener Verschleiß und damit verbundene Komforteinbußen vermieden werden können. Unter einer Formschlussschalteinheit soll in diesem Zusammenhang insbesondere eine Getriebeschalteinheit verstanden werden, die dazu vorgesehen ist, eine schaltbare formschlüssige Verbindung zwischen den zwei Kopplungshälften bereitzustellen. Unter einem Touchpoint soll insbesondere ein Zeitpunkt während des Schließvorgangs verstanden werden, an dem die Kopplungsverzahnung erstmalig in Kontakt mit der Sperrverzahnung und/oder der Fangverzahnung kommt. Unter einem "Durchgang der Synchrondrehzahl" soll insbesondere ein Zeitpunkt in dem Schließvorgang verstanden werden, an dem eine Differenzdrehzahl zwischen den Kopplungshälften den Wert Null aufweist. Unter einer "angeschrägten Verzahnung" soll in diesem Zusammenhang insbesondere eine Verzahnung verstanden werden, deren Klauen oder Zähne Stirnflächen aufweisen, die in Umfangsrichtung angeschrägt sind. Durch die angeschrägte Kopplungsverzahnung und die angeschrägte Fangverzahnung weist die Formschlussschalteinheit eine asymmetrische Ausgestaltung auf, wodurch die Formschlussschalteinheit eine ausgezeichnete Drehrichtung aufweist, in der ein Einspuren möglich ist. Unter "wenigsten drehfest verbunden" soll insbesondere drehfest verbunden oder einstückig ausgeführt verstanden werden. Unter "vorgesehen" soll insbesondere speziell programmiert, ausgelegt und/oder ausgestattet verstanden werden.
Vorteilhafter Weise entspricht die Synchrondrehzahl einer Nulldrehzahl. Ein solches Verfahren ist ganz besonders für eine als Bremse ausgebildete Formschlussschalteinheit vorteilhaft, bei der die eine Kopplungshälfte drehfest mit einem Getriebegehäuse verbunden ist. Besonders vorteilhaft ist die eine Kopplungshälfte einstückig mit dem Getriebegehäuse ausgeführt.
Vorzugsweise wird ein Differenzdrehzahlverlauf für den Schließvorgang der Formschlussschalteinheit aktiv eingestellt. Durch aktive Einstellung des Differenzdrehzahlverlaufs kann für den Touchpoint eine Drehzahldifferenz eingestellt werden, die einen komfortablen und verschleißarmen Schließvorgang ermöglicht. Zudem kann sichergestellt werden, dass der Differenzdrehzahlverlauf einen Durchgang der Differenzdrehzahl aufweist. Unter "aktiv einstellen" soll in diesem Zusammenhang insbesondere verstanden werden, dass der Differenzdrehzahlverlauf einer Sollkurve folgt, die beispielsweise durch eine Steuer- und/oder Regeleinheit vorgegeben wird.

Es wird vorgeschlagen, dass der Differenzdrehzahlverlauf durch Ansteuerung einer Antriebsmaschine eingestellt wird. Durch Ansteuerung der Antriebsmaschine kann der Differenzdrehzahlverlauf besonders gut eingestellt werden. Unter einer "Antriebsmaschine" wird dabei insbesondere eine Antriebsmaschine zum Antrieb eines Kraftfahrzeugs verstanden, wie beispielsweise eine Brennkraftmaschine oder ein Elektromotor.

Vorteilhafterweise wird für den Touchpoint eine zweistellige Differenzdrehzahl, insbesondere eine Differenzdrehzahl, die betragsmäßig zwischen in etwa 25 und in etwa 75 U/min liegt, eingestellt. Unter einer zweistelligen Differenzdrehzahl soll im Rahmen der Erfindung eine Differenzdrehzahl mit einem Betragswert zwischen 1 und 99 U/min verstanden werden. Dadurch kann eine Belastung der Formschlussschalteinheit gering gehalten werden. Zudem kann der Schließvorgang der Formschlussschalteinheit besonders vorteilhaft ausgestaltet werden. Die Differenzdrehzahl kann dabei insbesondere durch Ansteuerung der Antriebsmaschine eingestellt werden. Es ist beispielsweise aber auch denkbar, zur Einstellung der Differenzdrehzahl eine im Kraftfluss parallel zu der Formschlussschalteinheit vorgesehene Reibschlussschalteinheit vorzusehen, um die Differenzdrehzahl zu verändern.

Weiter wird vorgeschlagen, dass für den Touchpoint ein abgeflachter Differenzdrehzahlgradient eingestellt wird. Dadurch kann ein besonders hoher Komfort bei gleichzeitig geringem Verschleiß erreicht werden. Unter einem "Differenzdrehzahlgradient" wird insbesondere eine Änderungsrate der Differenzdrehzahl verstanden. Unter einem "abgeflachten Differenzdrehzahlgradient" wird insbesondere verstanden, dass der Differenzdrehzahlgradient in einem Zeitraum vor dem Touchpoint, insbesondere in einem Zeitraum zwischen dem Durchgang der Synchrondrehzahl und dem Touchpoint, abnimmt.

Zudem ist es vorteilhaft, wenn der Differenzdrehzahlgradient zumindest nahezu Null ist. Dadurch kann der Schließvorgang besonders komfortabel ausgeführt werden.

Erfindungsgemäß wird zudem ein Kraftfahrzeugantriebsstrang mit zumindest einer Kopplungseinheit vorgeschlagen, die zumindest ein wenigstens drehfest mit einer ersten Kopplungshälfte verbundenes Kopplungselement mit einer angeschrägten Kopplungsverzahnung sowie zumindest ein wenigstens drehfest mit einer zweiten Kopplungshälfte verbundenes Sperrelement mit einer Sperrverzahnung und zumindest ein mit der zweiten Kopplungshälfte verbundenes, gegenüber dem Sperrelement in Umfangsrichtung bewegliches Fangelement mit einer angeschrägten Fangverzahnung aufweist, und mit einer Steuer- und/oder Regeleinheit, die zumindest zur Ansteuerung der Formschlussschalteinheit vorgesehen ist, wobei die Steuer- und/oder Regeleinheit dazu vorgesehen ist, in einem Schließvorgang der Formschlussschalteinheit ein Touchpoint anzusteuern, der in einem Differenzdrehzahlverlauf nach einem Durchgang einer Synchrondrehzahl liegt. Der Kraftfahrzeugantriebsstrang umfasst vorzugsweise ein Getriebe zur Schaltung von Vorwärtsgetriebegängen, das die als Bremse ausgebildete Formschlussschalteinheit aufweist.
Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: schematisch ein Kraftfahrzeug mit einem Kraftfahrzeugantriebsstrang,
- Fig. 2: ein Getriebeschema eines Getriebes des Kraftfahrzeugantriebsstrangs,
- Fig. 3: ein Schaltschema für das Getriebe,
- Fig. 4: eine Formschlussschalteinheit einer Kopplungseinheit des Getriebes und

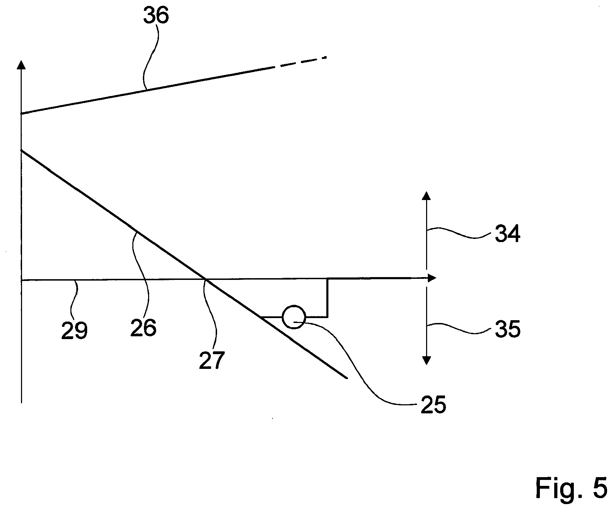

- Fig. 5: ein optimaler Differenzdrehzahlverlauf während eines Schließvorgangs.

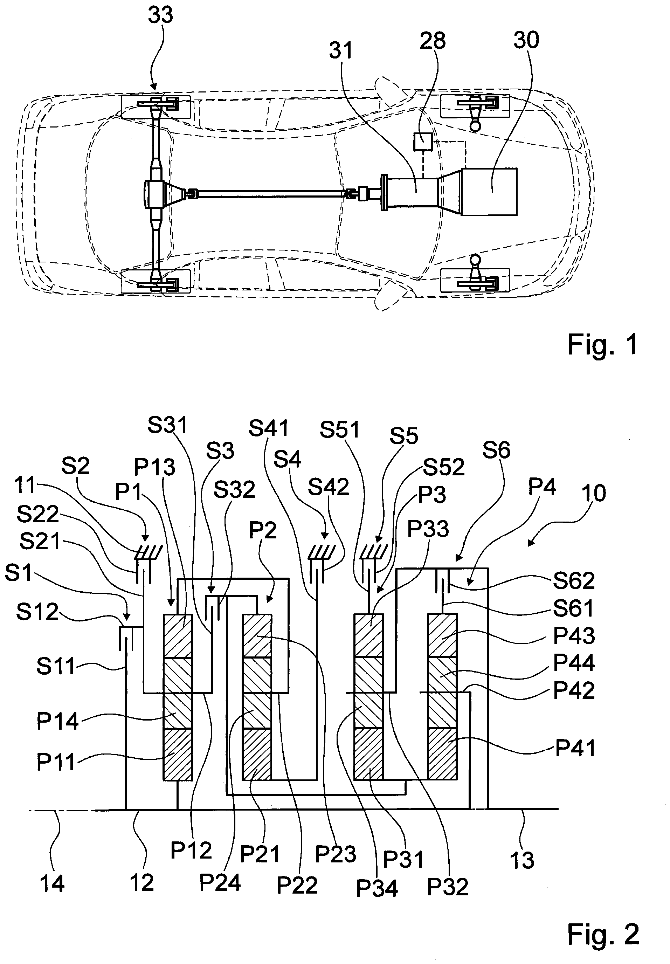

Figur 2 zeigt schematisiert einen Kraftfahrzeugantriebsstrang mit einer Antriebsmaschine 30, einem an die Antriebsmaschine 30 angebundenem Getriebe 31 und einem an das Getriebe 31 anschließenden Achsantrieb 33. Das Getriebe 31 ist als ein Mehrstufengetriebe ausgebildet. Das Getriebe 31 weist einen Getrieberadsatz 10 auf, der zur Schaltung von neun Vorwärtsgetriebegängen V1, V2, V3, V4, V5, V6, V7, V8, V9 und einem Rückwärtsgetriebegang R1 vorgesehen ist. Der Getrieberadsatz 10 ist in einem Kraftfluss zwischen dem Verbrennungsmotor und den Antriebsrädern angeordnet. Der Getrieberadsatz 10 kann mit einem Hybridantriebsmodul verbunden werden, mittels dem ein Antriebsmoment verändert werden kann. Weiter kann mittels des Hybridantriebsmoduls und dem Getrieberadsatz 10 ein CVT realisiert werden, wodurch das Übersetzungsverhältnis zumindest in Teilbereichen stufenlos eingestellt werden kann.

Die Getriebevorrichtung weist weiter ein karosseriefest angeordnetes Getriebegehäuse 11, eine das Getriebegehäuse 11 durchsetzende Getriebeeingangswelle 12 und eine das Getriebegehäuse 11 durchsetzende Getriebeausgangswelle 13 auf. Der Getrieberadsatz 10 ist innerhalb des Getriebegehäuses 11 angeordnet. Die Getriebeeingangswelle 12 ist zur Einleitung eines von der Antriebsmaschine 30 abgegebenen Antriebsmoments vorgesehen. Die Getriebeausgangswelle 13 ist zur Anbindung des Achsantriebs 33 vorgesehen. Der Getriebeeingangswelle 12 kann ein nicht näher dargestelltes Modul vorgeschaltet sein, das insbesondere eine Anfahrfunktionalität bereitstellt, wie beispielsweise ein Drehmomentwandler oder eine nasse Anfahrkupplung. Die Getriebeeingangswelle 12 und die Getriebeausgangswelle 13, die in dem dargestellten Ausführungsbeispiel koaxial zueinander angeordnet sind, können grundsätzlich beliebig zueinander angeordnet sein.

Der Getrieberadsatz 10 weist vier Planetenradstufen P1, P2, P3, P4 auf, die zur Schaltung der Vorwärtsgetriebegänge V1-V9 und des Rückwärtsgetriebegangs R1 wirkungsmäßig miteinander verbunden sind (vgl. Figur 2). Die erste Planetenradstufe P1, die zweite Planetenradstufe P2, die dritte Planetenradstufe P3 und die vierte Planetenradstufe P4 sind hintereinander entlang einer Hauptrotationsachse 14 angeordnet. Die Planetenradstufen P1, P2, P3, P4 weisen eine gemeinsame Rotationsachse auf und legen eine Hauptrotationsachse 14 fest. Sämtliche Planetenradstufen P1, P2, P3, P4 des Getrieberadsatzes 10 weisen einen Einfachplanetenradsatz auf. Die Bezeichnungen "erste", "zweite", "dritte" und "vierte" Planetenradstufe P1, P2, P3, P4 kennzeichnen eine bevorzugte axiale Reihenfolge der Planetenradstufen P1, P2, P3, P4 ausgehend von dem Verbrennungsmotor. Demnach ist die erste Planetenradstufe P1 im Vergleich zu den anderen Planetenradstufen P2, P3, P4 an erster axialer Position, die zweite Planetenradstufe P2 im Vergleich zu den anderen Planetenradstufen P1, P3, P4 an zweiter axialer Position, die dritte Planetenradstufe P3 im Vergleich zu den anderen Planetenradstufen P1, P2, P4 an dritter axialer Position und die vierte Planetenradstufe P4 im Vergleich zu den anderen Planetenradstufen P1, P2, P3 an vierter axialer Position angeordnet. Grundsätzlich kann eine Anordnung der Planetenradstufen P1, P2, P3, P4 von der dargestellten Anordnung abweichen.

Im Folgenden werden die vier Planetenradstufen P1, P2, P3, P4 näher beschrieben. Die vier Planetenradstufen P1, P2, P3, P4 weisen jeweils ein Sonnenrad, einen Planetenradträger und ein Hohlrad auf. Dabei sollen zur Vereinfachung unter einem "ersten bis vierten Planetenradträger", einem "ersten bis vierten Sonnenrad" und einem "ersten bis vierten Hohlrad" ein der ersten bis vierten Planetenradstufe P1, P2, P3, P4 zugeordneter Planetenradträger bzw. ein Sonnenrad oder ein Hohlrad verstanden werden, d.h. beispielsweise, dass unter dem ersten Planetenradträger ein Planetenradträger der ersten Planetenradstufe P1 verstanden werden soll.

Die erste Planetenradstufe P1 ist eingangsseitig angeordnet. Die erste Planetenradstufe P1 umfasst ein erstes Sonnenrad P11, ein erstes Hohlrad P13 und einen ersten Planetenradträger P12. Der erste Planetenradträger P12 führt Planetenräder P14 der ersten Planetenradstufe P1 auf einer Kreisbahn. Die Planetenräder P14 kämmen mit dem ersten Sonnenrad P11 und mit dem ersten Hohlrad P13. Die Planetenräder P14 sind drehbar auf dem ersten Planetenradträger P12 gelagert.

Die zweite Planetenradstufe P2 ist mittig eingangsseitig angeordnet. Die zweite Planetenradstufe P2 umfasst ein zweites Sonnenrad P21, ein zweites Hohlrad P23 und einen zweiten Planetenradträger P22. Der zweite Planetenradträger P22 führt Planetenräder P24 der zweiten Planetenradstufe P2 auf einer Kreisbahn. Die Planetenräder P24 kämmen mit dem zweiten Sonnenrad P21 und mit dem zweiten Hohlrad P23. Die Planetenräder P24 sind drehbar auf dem zweiten Planetenradträger P22 gelagert.

Die dritte Planetenradstufe P3 ist mittig ausgangsseitig angeordnet. Die dritte Planetenradstufe P3 umfasst ein drittes Sonnenrad P31, ein drittes Hohlrad P33 und einen dritten Planetenradträger P32. Der dritte Planetenradträger P32 führt Planetenräder P34 der dritten Planetenradstufe P3 auf einer Kreisbahn. Die Planetenräder P34 kämmen mit dem dritten Sonnenrad P31 und mit dem dritten Hohlrad P33. Die Planetenräder P34 sind drehbar auf dem dritten Planetenradträger P32 gelagert.

Die vierte Planetenradstufe P4 ist ausgangsseitig angeordnet. Die vierte Planetenradstufe P4 umfasst ein viertes Sonnenrad P41, ein viertes Hohlrad P43 und einen vierten Planetenradträger P42. Der vierte Planetenradträger P42 führt Planetenräder P44 der vierten Planetenradstufe P4 auf einer Kreisbahn. Die Planetenräder P44 kämmen mit dem vierten Sonnenrad P41 und mit dem vierten Hohlrad P43. Die Planetenräder P44 sind drehbar auf dem vierten Planetenradträger P42 gelagert.

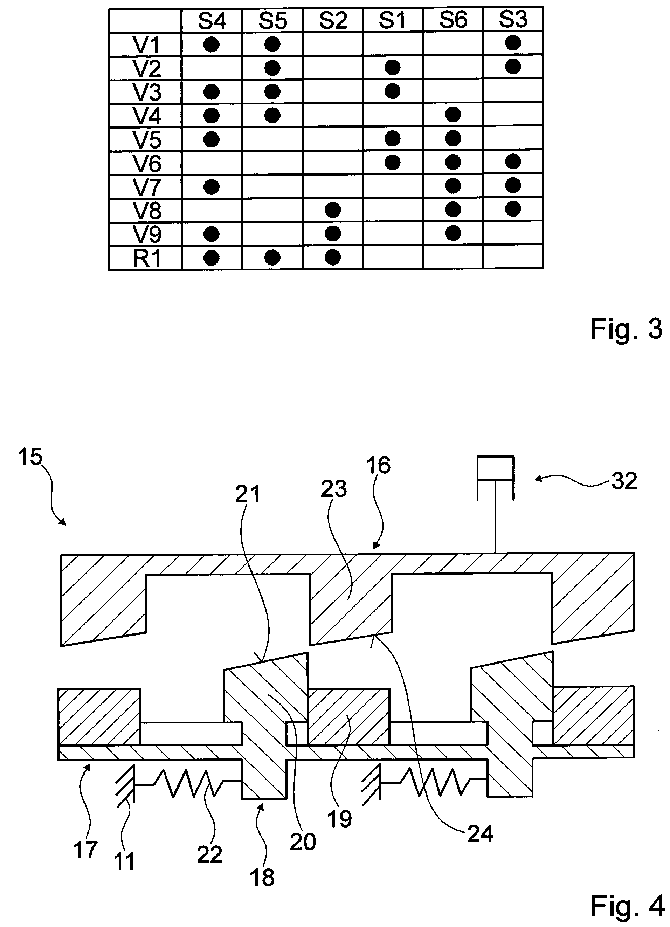

Zur Schaltung der Vorwärtsgetriebegänge V1-V9 und des Rückwärtsgetriebegangs R1 umfasst das Getriebe 31 drei Kopplungseinheiten S1, S3, S6, die als Kupplungen ausgebildet sind, und drei Kopplungseinheiten S2, S4, S5, die als Bremsen ausgebildet sind. Die drei als Kupplungen ausgebildeten Kopplungseinheiten S1, S3, S6 weisen jeweils eine erste drehbar angeordnete Kopplungshälfte S11, S31, S61 und eine zweite drehbar angeordnete Kopplungshälfte S12, S32, S62 auf. Die Kopplungseinheiten S1, S3, S6 sind jeweils dazu vorgesehen, ihre beiden drehbar angeordneten Kopplungshälften S11, S12, S31, S32, S61, S62 drehfest miteinander zu verbinden. Die drei als Bremsen ausgebildeten Kopplungseinheiten S2, S4, S5 weisen jeweils eine drehbar angeordnete Kopplungshälfte S21, S41, S51 und eine feststehende, gehäusefeste Kopplungshälfte S22, S42, S52 auf. Die Kopplungseinheiten S2, S4, S5 sind jeweils dazu vorgesehen, ihre drehbaren Kopplungshälften S21, S41, S51 und ihre feststehenden Kopplungshälften S22, S42, S52 drehfest miteinander zu verbinden. Eine Schaltlogik zur Schaltung der Vorwärtsgetriebegänge V1-V9 und des Rückwärtsgetriebegangs R1 ist in Figur 3 gezeigt.

Die erste Planetenradstufe P1 und die vierte Planetenradstufe P4 bilden Eingangsstufen des Getriebes 31 aus. Die Getriebeeingangswelle 12, das erste Sonnenrad P11, der vierte Planetenradträger P42 und die erste Kopplungshälfte S11 der ersten Kopplungseinheit S1 sind permanent drehfest miteinander verbunden. Das erste Hohlrad P13 und der zweite Planetenradträger P22 sind permanent drehfest miteinander verbunden. Das zweite Hohlrad P23, das dritte Sonnenrad P31, das vierte Sonnenrad P41 und die zweite Kopplungshälfte S32 der dritten Kopplungseinheit S3 sind permanent drehfest miteinander verbunden. Der erste Planetenradträger P12, die zweite Kopplungshälfte S12 der ersten Kopplungseinheit S1, die erste Kopplungshälfte S21 der zweiten Kopplungseinheit S2 und die erste Kopplungshälfte S31 der dritten Kopplungseinheit S3 sind permanent drehfest miteinander verbunden. Das zweite Sonnenrad P21 und die erste Kopplungshälfte S41 der vierten Kopplungseinheit S4 sind permanent drehfest miteinander verbunden. Das dritte Hohlrad P33 und die erste Kopplungshälfte S51 der fünften Kopplungseinheit S5 sind permanent drehfest miteinander verbunden. Die dritte Planetenradstufe P3 und die vierte Planetenradstufe P4 sind als Ausgangsstufen ausgebildet. Der dritte Planetenradträger P32 und die zweite Kopplungshälfte S62 der sechsten Kopplungseinheit S6 sind permanent drehfest miteinander verbunden.

Die fünfte Kopplungseinheit S5 weist eine Formschlussschalteinheit 15 auf, die für eine formschlüssige Verbindung der zwei Kopplungshälften S51, S52 vorgesehen ist. Die fünfte Kopplungseinheit S5 kann dabei grundsätzlich eine parallel zu der Formschlussschalteinheit 15 angeordnete Reibschlussschalteinheit aufweisen, die ebenfalls dazu vorgesehen ist, die zwei Kopplungshälften S51, S52 miteinander zu verbinden. Es ist aber auch denkbar, dass die Kopplungseinheit S5 lediglich die Formschlussschalteinheit 15 aufweist.

In dem Rückwärtsgetriebegang R1 und in den Vorwärtsgetriebegängen V1, V2, V3, V4 ist die Kopplungseinheit S5 geschlossen. In den Vorwärtsgetriebegängen V5, V6, V7, V8, V9 ist die Kopplungseinheit S5 geöffnet. Bei einem Hochschaltvorgang von dem Rückwärtsgetriebegang R1 oder einem der Vorwärtsgetriebegänge V1, V2, V3, V4 in einen der Vorwärtsgetriebegänge V5, V6, V7, V8, V9 wird die Kopplungseinheit S5 geöffnet. Bei einem Rückschaltvorgang von einem der Vorwärtsgetriebegänge V5, V6, V7, V8, V9 in einen der Vorwärtsgetriebegänge V1, V2, V3, V4 oder in den Rückwärtsgetriebegang R1 wird die Kopplungseinheit S5 geschlossen. Die Kopplungseinheit S5 weist in den Vorwärtsgetriebegängen V5, V6, V7, V8, V9 Drehzahlfaktoren auf, die bezogen auf eine Eingangsdrehzahl jeweils das gleiche Vorzeichen aufweisen. Ist einer der Vorwärtsgetriebegänge V5, V6, V7, V8, V9 geschaltet, ist eine Relativdrehbewegung zwischen den Kopplungshälften S51, S52 der Kopplungseinheit S5 in eine erste Drehrichtung 34 orientiert. Die Formschlussschalteinheit 15 ist asymmetrisch ausgeführt. Ein Einspuren der Formschlussschalteinheit 15 ist lediglich möglich, wenn die Relativbewegung der Kopplungshälfte S51 in eine zweite Drehrichtung 35 orientiert ist, die entgegengesetzt zu der ersten Drehrichtung 34 der Relativbewegung in den Vorwärtsgetriebegängen V5, V6, V7, V8 gerichtet ist.

Bei der als Bremse ausgeführten Kopplungseinheit S5 ist die zweite Kopplungshälfte S52 einstückig mit dem Getriebegehäuse 11 ausgeführt. Die erste Kopplungshälfte S51 ist drehbar gelagert. Die Formschlussschalteinheit 15 umfasst ein wenigstens drehfest mit der ersten Kopplungshälfte S51 verbundenes Kopplungselement 16. Zudem umfasst die Formschlussschalteinheit 15 zumindest ein wenigstens drehfest mit der zweiten Kopplungshälfte S52 verbundenes Sperrelement 17 und zumindest ein mit der zweiten Kopplungshälfte S52 verbundenes Fangelement 18 aufweist. Das Fangelement 18 ist gegenüber dem Sperrelement 17 in Umfangsrichtung beweglich. Das Fangelement 18 und das Sperrelement 17 können um einen begrenzten Winkel gegeneinander verdreht werden.

Das wenigstens drehfest mit der zweiten Kopplungshälfte S52 verbundene Sperrelement 17 ist einstückig mit dem Getriebegehäuse 11 ausgeführt. Alternativ kann das Sperrelement 17 auch fest mit dem Getriebegehäuse 11 verbunden sein. Das Sperrelement 17 weist eine Sperrverzahnung 19 auf, die für eine formschlüssige Verbindung der zwei Kopplungshälften S51, S52 vorgesehen ist. Die Sperrverzahnung 19 weist eine Mehrzahl von Sperrklauen auf, die einstückig mit dem Getriebegehäuse 11 ausgebildet sind.

Das Fangelement 18 ist getrennt von dem Getriebegehäuse 11 ausgeführt, aber mit dem Getriebegehäuse 11 verbunden. Das Fangelement 18 weist eine angeschrägte Fangverzahnung 20 auf, die zur Herstellung der formschlüssigen Verbindung der zwei Kopplungshälften S51, S52 vorgesehen ist. Das Fangelement 18 kann beispielsweise in Form eines Rings ausgebildet sein, der drehbar gegenüber dem Getriebegehäuse 11 gelagert ist. Die Fangverzahnung 20 weist eine Mehrzahl von Fangklauen auf, welche durch den Ring ausgebildet oder drehfest mit dem Ring verbunden sind. Die Fangklauen weisen Stirnflächen 21 auf, die in Umfangsrichtung angeschrägt sind. In dem dargestellten Ausführungsbeispiel sind die Sperrklauen und die Fangklauen jeweils im Wechsel angeordnet.

Die Formschlussschalteinheit 15 umfasst wenigstens ein Federelement 22, das zwischen dem Sperrelement 17 und dem Fangelement 18 angeordnet ist. Das zumindest eine Federelement 22 ist dazu vorgesehen, eine in Umfangsrichtung wirkende Federkraft bereitzustellen. Die Federkraft ist entgegengesetzt zu der zweiten Drehrichtung 35, entlang der die Formschlussschalteinheit 15 für ein Einspuren vorgesehen ist, gerichtet. Die in dem Ausführungsbeispiel dargestellten Federelemente 22 sind als Druckfedern ausgebildet. Alternativ sind auch andere Ausgestaltungen möglich.

Das Kopplungselement 16 ist drehfest mit der ersten Kopplungshälfte S51 verbunden. Das Kopplungselement 16 weist eine angeschrägte Kopplungsverzahnung 23 auf. Die Kopplungsverzahnung 23 umfasst eine Mehrzahl von Kopplungsklauen. Die Kopplungsklauen weisen Stirnflächen 24 auf, die ebenfalls in Umfangsrichtung angeschrägt sind. Die Stirnflächen 24 der Kopplungsklauen sind dabei entgegensetzt geneigt wie die Stirnflächen 21 der Fangklauen. Die Formschlussschalteinheit 15 ist durch die angeschrägten Stirnflächen 21, 24 der Fangklauen und der Kopplungsklauen asymmetrisch ausgeführt.

Die Fangklauen überragen die Sperrklauen in axialer Richtung. In einem Schließvorgang kontaktieren die Kopplungsklauen zunächst lediglich die Fangklauen. Ein Zeitpunkt in einem Schließvorgang, zu dem sich die Kopplungsklauen und die Fangklauen erstmalig berühren, wird im Folgenden als Touchpoint 25 bezeichnet. Ist die Relativdrehbewegung entlang der zweiten Drehrichtung 35 orientiert, entlang der die Formschlussschalteinheit 15 für eine Verbindung vorgesehen ist, werden die Fangklauen gegenüber den Sperrklauen verdreht und die Kopplungsklauen können zwischen die Sperrklauen und die Fangklauen einspuren. Ist die Relativdrehbewegung entlang der ersten Drehrichtung 34 orientiert, sorgen die angeschrägten Stirnflächen 21 der Fangklauen und die angeschrägten Stirnflächen 24 der Kopplungsklauen dafür, dass die Kopplungshälften S51, S52 einander abgewiesen werden. Ein Einspuren der Kopplungsverzahnung 23 in die Fangverzahnung 20 wird verhindert.

Der Kraftfahrzeugantriebsstrang weist eine Steuer- und Regeleinheit 28 auf, die zur Ansteuerung der Formschlussschalteinheit 15 vorgesehen ist. Die Formschlussschalteinheit 15 umfasst einen Betätigungsaktor 32, der dazu vorgesehen ist, das Kopplungselement 16 relativ zu dem Sperrelement 17 und dem Fangelement 18 zu bewegen. In dem dargestellten Ausführungsbeispiel sind das Sperrelement 17 und das Fangelement 18 in axialer Richtung fest angeordnet. Das Kopplungselement 16 ist in axialer Richtung verschiebbar angeordnet. Es ist auch denkbar, dass die zweite Kopplungshälfte S52 anstelle der ersten Kopplungshälfte S51 axial verschiebbar ist. Der Betätigungsaktor 32 ist dazu vorgesehen, das Kopplungselement 16 in axialer Richtung zu verschieben. Der Betätigungsaktor 32 ist vorzugsweise hydraulisch ausgeführt und umfasst einen Betätigungskolben, der auf das Kopplungselement 16 wirkt. Alternativ ist auch eine andere Ausgestaltung des Betätigungsaktors 32 möglich, beispielsweise kann ein Ein- und ein Auslegen hydraulisch erfolgen. Der Betätigungsaktor 32 ist an die Steuer- und Regeleinheit 28 angebunden.

Der Touchpoint 25, an dem die Kopplungshälften S51, S52 während des Schließvorgangs erstmalig in Kontakt kommen, kann durch Ansteuerung des Betätigungsaktors 32 eingestellt werden. In dem Schließvorgang wird ein Touchpoint 25 eingestellt, der nach einem Durchgang 27 einer Synchrondrehzahl 29 liegt. Der Rückschaltvorgang der Kopplungseinheit S5 ist bei dem dargestellten Schaltschema mit einem Rückschaltvorgang von einem der Vorwärtsgetriebegänge V5, V6, V7, V8 in einen der Vorwärtsgetriebegänge V1, V2, V3, V4 verbunden. Zu Beginn des Schließvorgangs der Kopplungseinheit S5 ist die Relativdrehbewegung der beiden Kopplungshälften S51, S52 in die erste Drehrichtung 34 orientiert. Nach dem Durchgang 27 der Synchrondrehzahl 29 ist die Relativdrehbewegung der beiden Kopplungshälften S51, S52 in die zweite Drehrichtung 35 orientiert.

Ein Differenzdrehzahlverlauf 26 für das Schließen der Formschlussschalteinheit 15 wird aktiv eingestellt. Der Differenzdrehzahlverlauf 26 wird durch die Steuer- und Regeleinheit 28 eingestellt. In dem in Figur 4 dargestellten Differenzdrehzahlverlauf 26 entspricht eine positive Differenzdrehzahl einer Relativdrehbewegung in die erste Drehrichtung 34. Der von der Steuer- und Regeleinheit 28 eingestellte Differenzdrehzahlverlauf 26 weist zunächst eine Differenzdrehzahl größer Null auf. In dem Durchgang 27 der Synchrondrehzahl 29 ist die Differenzdrehzahl Null. Nach dem Durchgang 27 der Synchrondrehzahl 29 ist die Differenzdrehzahl negativ.

Der Differenzdrehzahlverlauf 26 wird durch Ansteuerung der Antriebsmaschine 30 eingestellt. In Abhängigkeit von dem Schaltschema ist die erste Kopplungshälfte S51 der Kopplungseinheit S5 wirkungsmäßig mit der Getriebeeingangswelle 12 verbunden, wenn wenigstens eine der weiteren Kopplungseinheiten S1, S2, S3, S4, S6 geschlossen ist. Bei einem Rückschaltvorgang muss eine Drehzahl 36 der Antriebsmaschine 30 erhöht werden, zumindest wenn eine Drehzahl der Getriebeausgangswelle 13 im Wesentlichen konstant bleibt. In dem Schließvorgang der Kopplungseinheit S1, S2, S3, S4, S5, S6 stellt die Steuer- und Regeleinheit 28 für die Antriebsmaschine 30 eine Drehzahlkurve ein, bei der der Differenzdrehzahlverlauf 26 den Durchgang 27 der Synchrondrehzahl 29 aufweist.

Die Einstellung des Touchpoints 25 erfolgt in dem Rückschaltvorgang von einem der Vorwärtsgetriebegänge V5, V6, V7, V8 in einen der Vorwärtsgetriebegänge V1, V2, V3, V4. Da die Kopplungseinheit S5 als Bremse ausgeführt ist, entspricht die Synchrondrehzahl 29 einer Nulldrehzahl der ersten Kopplungshälfte S51, d.h. ein Verlauf einer Absolutdrehzahl der ersten Kopplungshälfte S51 weist einen Nulldurchgang auf. Eine Drehbewegung der ersten Kopplungshälfte S51 weist in dem Rückschaltvorgang eine Drehrichtungsumkehr auf.

Der Touchpoint 25, der von der Steuer- und Regeleinheit 28 durch Ansteuerung des Betätigungsaktors 32 eingestellt wird, liegt unmittelbar nach dem Durchgang 27 der Synchrondrehzahl 29. Die Differenzdrehzahl, die für den Touchpoint 25 eingestellt wird, liegt bei betragsmäßig höchstens 50 U/min. Die Differenzdrehzahl wird durch die Ansteuerung der Antriebsmaschine 30 eingestellt.

Für den Touchpoint 25 wird ein abgeflachter Differenzdrehzahlgradient eingestellt. Der Differenzdrehzahlgradient entspricht einer Steigung des in Figur 4 dargestellten Differenzdrehzahlverlaufs 26. In dem Durchgang 27 der Synchrondrehzahl 29 weist der Differenzdrehzahlverlauf 26 einen größeren Differenzdrehzahlgradienten als an dem Touchpoint 25 auf. Zwischen dem Durchgang 27 der Synchrondrehzahl 29 und dem Touchpoint 25 nimmt der Differenzdrehzahlgradient kontinuierlich ab. Der Differenzdrehzahlverlauf 26 weist zwischen dem Durchgang 27 der Synchrondrehzahl 29 und dem Touchpoint 25 eine positive Krümmung auf.

An dem Touchpoint 25 ist der Differenzdrehzahlgradient nahezu Null. Der Differenzdrehzahlverlauf 26 weist einen nahezu waagrechten Verlauf auf. Während eines an den Touchpoints 25 anschließenden Einspurvorgangs kann, solange die Kopplungsklauen noch über die Fangklauen hinweggleiten, die Differenzdrehzahl noch einen Wert ungleich Null aufweisen. Mit dem Eingreifen der Kopplungsklauen zwischen die Fangklauen sinkt die Differenzdrehzahl auf Null. Sobald die Kopplungsklauen in Eingriff mit den Sperrklauen stehen, ist die Formschlussschalteinheit 15 vollständig geschaltet und der Einspurvorgang abgeschlossen.

### Bezugszeichenliste

- 10: Getrieberadsatz
- 11: Getriebegehäuse
- 12: Getriebeeingangswelle
- 13: Getriebeausgangswelle
- 14: Hauptrotationsachse
- 15: Formschlussschalteinheit
- 16: Kopplungselement
- 17: Sperrelement
- 18: Fangelement
- 19: Sperrverzahnung
- 20: Fangverzahnung
- 21: Stirnflächen
- 22: Federelement
- 23: Kopplungsverzahnung
- 24: Stirnflächen
- 25: Touchpoint
- 26: Differenzdrehzahlverlauf
- 27: Durchgang
- 28: Steuer- und/oder Regeleinheit
- 29: Synchrondrehzahl
- 30: Antriebsmaschine
- 31: Getriebe
- 32: Betätigungsaktor
- 33: Achsantrieb
- 34: Drehrichtung
- 35: Drehrichtung
- 36: Drehzahl
- P1: Planetenradstufe
- P2: Planetenradstufe
- P3: Planetenradstufe
- P4: Planetenradstufe
- R1: Rückwärtsgetriebegang
- S1: Kopplungseinheit
- S2: Kopplungseinheit
- S3: Kopplungseinheit
- S4: Kopplungseinheit
- S5: Kopplungseinheit
- S6: Kopplungseinheit
- V1: Vorwärtsgetriebegänge
- V2: Vorwärtsgetriebegänge
- V3: Vorwärtsgetriebegänge
- V4: Vorwärtsgetriebegänge
- V5: Vorwärtsgetriebegänge
- V6: Vorwärtsgetriebegänge
- V7: Vorwärtsgetriebegänge
- V8: Vorwärtsgetriebegänge
- V9: Vorwärtsgetriebegänge
- P11: Sonnenrad
- P12: Planetenradträger
- P13: Hohlrad
- P14: Planetenräder
- P21: Sonnenrad
- P22: Planetenradträger
- P23: Hohlrad
- P24: Planetenräder
- P31: Sonnenrad
- P32: Planetenradträger
- P33: Hohlrad
- P34: Planetenräder
- P41: Sonnenrad
- P42: Planetenradträger
- P43: Hohlrad
- P44: Planetenräder
- S11: Kopplungshälfte
- S12: Kopplungshälfte
- S21: Kopplungshälfte
- S22: Kopplungshälfte
- S31: Kopplungshälfte
- S32: Kopplungshälfte
- S41: Kopplungshälfte
- S42: Kopplungshälfte
- S51: Kopplungshälfte
- S52: Kopplungshälfte
- S61: Kopplungshälfte
- S62: Kopplungshälfte

## Patentansprüche

1. Verfahren zur Ansteuerung einer Formschlussschalteinheit (15), bei dem in einem Schließvorgang ein mit einer ersten Kopplungshälfte (S51) verbundenes Kopplungselement (16), das eine angeschrägte Kopplungsverzahnung (23) aufweist, mit einem mit einer zweiten Kopplungshälfte (S52) verbundenem Sperrelement (17), das eine Sperrverzahnung (19) aufweist, und einem mit der zweiten Kopplungshälfte (S52) verbundenen, gegenüber dem Sperrelement (17) in Umfangsrichtung beweglichen Fangelement (18), das eine angeschrägte Fangverzahnung (20) aufweist, in Eingriff gebracht wird,
**dadurch gekennzeichnet, dass**
in dem Schließvorgang der Formschlussschalteinheit (15) ein Touchpoint (25) eingestellt wird, der in einem Differenzdrehzahlverlauf (26) nach einem Durchgang (27) einer Synchrondrehzahl (29) liegt, wobei die Synchrondrehzahl (29) einer Nulldrehzahl entspricht.

2. Verfahren nach Anspruch 1,
**dadurch gekennzeichnet, dass**
ein Differenzdrehzahlverlauf (26) für den Schließvorgang der Formschlussschalteinheit (15) aktiv eingestellt wird.

3. Verfahren nach Anspruch 1 oder 2,
**dadurch gekennzeichnet, dass**
der Differenzdrehzahlverlauf (26) durch Ansteuerung einer Antriebsmaschine (30) eingestellt wird.

4. Verfahren nach einem der vorhergehenden Ansprüche,
**dadurch gekennzeichnet, dass**
die Formschlussschalteinheit (15) als Bremse (S5) ausgebildet ist, bei der die zweite Kopplungshälfte (S52) drehfest mit einem Getriebegehäuse (11) verbunden ist.

5. Verfahren nach einem der vorhergehenden Ansprüche,
**dadurch gekennzeichnet, dass**
der Schließvorgang der Formschlussschalteinheit (15) in einem Rückschaltvorgang erfolgt.

6. Verfahren nach einem der vorhergehenden Ansprüche,
**dadurch gekennzeichnet, dass**
für den Touchpoint (25) eine zweistellige Differenzdrehzahl gewählt wird.

7. Verfahren nach einem der vorhergehenden Ansprüche,
**dadurch gekennzeichnet, dass**
für den Touchpoint (25) ein abgeflachter Differenzdrehzahlgradient eingestellt wird.

8. Verfahren nach Anspruch 6,
**dadurch gekennzeichnet, dass**
der Differenzdrehzahlgradient zumindest nahezu Null ist.

9. Kraftfahrzeugantriebsstrang mit zumindest einer Formschlussschalteinheit (15), die zumindest ein wenigstens drehfest mit einer ersten Kopplungshälfte (S51) verbundenes Kopplungselement (16) mit einer angeschrägten Kopplungsverzahnung (23) sowie zumindest ein wenigstens drehfest mit einer zweiten Kopplungshälfte (S52) verbundenes Sperrelement (17) mit einer Sperrverzahnung (19) und zumindest ein mit der zweiten Kopplungshälfte (S52) verbundenes, gegenüber dem Sperrelement (17) in Umfangsrichtung bewegliches Fangelement (18) mit einer angeschrägten Fangverzahnung (20) aufweist, und mit einer Steuer- und/oder Regeleinheit (28), die zumindest zur Ansteuerung der Formschlussschalteinheit (15) vorgesehen ist,
**dadurch gekennzeichnet, dass**
die Steuer- und/oder Regeleinheit (28) dazu vorgesehen ist, in einem Schließvorgang der Formschlussschalteinheit (15) einen Touchpoint (25) anzusteuern, der in einem Differenzdrehzahlverlauf (26) nach einem Durchgang (27) einer Synchrondrehzahl (29) liegt, wobei die Synchrondrehzahl (29) einer Nulldrehzahl entspricht..

10. Kraftfahrzeugantriebstrang nach Anspruch 9,
**gekennzeichnet durch**
ein Getriebe (31) zur Schaltung von Vorwärtsgetriebegängen (V1-V9), das die als Bremse ausgebildete Formschlussschalteinheit (15) aufweist.

## Claims

1. Method for actuating a positively locking shifting unit (15), wherein, in a closing process, a coupling element (16) connected to a first coupling half (S51) and having a tapered coupling toothing system (23) is brought into engagement with a locking element (17) connected to a second coupling half (S52) and having a locking toothing system (19) and with a catching element (18) connected to the second coupling half (S52) and movable relative to the locking element (17) in the circumferential direction and having a tapered catch toothing system (20),
**characterised in that**
in the closing process of the positively locking shifting unit (15), a touch point (25) is set which lies in a differential speed path (26) after a transit (27) of a synchronous speed (29), the synchronous speed (29) corresponding to a zero speed.

2. Method according to claim 1,
**characterised in that**
a differential speed path (26) is actively set for the closing process of the positively locking shifting unit (15).

3. Method according to claim 1 or 2,
**characterised in that**
the differential speed path (26) is set by actuating a motor (30).

4. Method according to any of the preceding claims,
**characterised in that**
the positively locking shifting unit (15) is designed as a brake (S5), in which the second coupling half (S52) is non-rotatably connected to a gear case (11).

5. Method according to any of the preceding claims,
**characterised in that**
the closing process of the positively locking shifting unit (15) happens in a downshifting process.

6. Method according to any of the preceding claims,
**characterised in that**
a two-digit differential speed is selected for the touch point (25).

7. Method according to any of the preceding claims,
**characterised in that**
a flattened differential speed gradient is set for the touch point (25).

8. Method according to claim 8,
**characterised in that**
the differential speed gradient is at least approximately zero.

9. Motor vehicle drive train with at least one positively locking shifting unit (15) comprising at least one coupling element (16) connected at least non-rotatably to a first coupling half (S51) and having a tapered coupling toothing system (23) and at least one locking element (17) connected at least non-rotatably to a second coupling half (S52) and having a locking toothing system (19) and at least one catching element (18) connected to the second coupling element (S52) and movable relative to the locking element (17) in the circumferential direction and having a tapered catch toothing system (20), and with an open- and/or closed loop control unit (28) provided at least for the actuation of the positively locking shifting unit (15),
**characterised in that**
the open- and/or closed loop control unit (28) is provided to actuate, in a closing process of the positively locking shifting unit (15), a touch point (25) which corresponds to a differential speed path (26) after a transit (27) of a synchronous speed (29), the synchronous speed (29) corresponding to a zero speed.

10. Motor vehicle according to claim 9,
**characterised by**
a gearbox (31) for selecting forward gears (V1-V9), the gearbox (31) comprising the positively locking shifting unit (15) designed as a brake.

## Revendications

1. Procédé de commande d'une unité de commutation à complémentarité de formes (15), selon lequel, dans un processus de fermeture, un élément d'accouplement (16) qui est relié à une première moitié d'accouplement (S51) et qui présente une denture d'accouplement biseautée (23), est amené à s'engrener avec un élément de blocage (17) qui est relié à une seconde moitié d'accouplement (S52) et qui présente une denture de blocage (19), et comprenant un élément d'arrêt (18) qui est mobile dans la direction circonférentielle par rapport à l'élément de blocage (17) et qui est relié à la seconde moitié d'accouplement (S52) et qui présente une denture d'arrêt biseautée (20),
**caractérisé en ce que** dans le processus de fermeture de l'unité de commutation à complémentarité de formes (15) il est créé un point de contact (25) qui se situe dans une variation de vitesse différentielle (26) après un passage (27) d'une vitesse synchrone (29), la vitesse synchrone (29) correspondant à une vitesse nulle.

2. Procédé selon la revendication 1, **caractérisé en ce qu'**une variation de vitesse différentielle (26) pour le processus de fermeture de l'unité de commutation par complémentarité de formes (15) est réglée activement.

3. Procédé selon la revendication 1 ou 2, **caractérisé en ce que** la variation de vitesse différentielle (26) est réglée par la commande d'une machine d'entraînement (30).

4. Procédé selon l'une quelconque des revendications précédentes, **caractérisé en ce que** l'unité de commutation par complémentarité de formes (15) est conçue sous la forme de frein (S5), la seconde moitié d'accouplement (S52) étant reliée solidaire en rotation à un carter (11) de transmission.

5. Procédé selon l'une quelconque des revendications précédentes, **caractérisé en ce que** le processus de fermeture de l'unité de commutation par complémentarité de formes (15) s'effectue dans un processus de réduction de vitesse.

6. Procédé selon l'une quelconque des revendications précédentes, **caractérisé en ce que** pour le point de contact (25) on sélectionne une vitesse différentielle à deux chiffres.

7. Procédé selon l'une quelconque des revendications précédentes, **caractérisé en ce que** pour le point de contact (25) on règle un gradient de vitesse différentielle ralentie.

8. Procédé selon la revendication 6, **caractérisé en ce que** le gradient de vitesse différentielle est au moins quasiment nul.

9. Groupe motopropulseur de véhicule automobile comprenant au moins une unité de commutation par complémentarité de formes (15) qui présente au moins un élément d'accouplement (16) relié solidaire en rotation à une première moitié d'accouplement (S51) ayant une denture d'accouplement biseautée (23) ainsi qu'au moins un élément de blocage (17) relié solidaire en rotation avec une seconde moitié d'accouplement (S52) ayant une denture de blocage (19) et au moins un élément d'arrêt (18) mobile dans la direction circonférentielle par rapport à l'élément de blocage (17) relié à la seconde moitié d'accouplement (S52) ayant une denture d'arrêt biseautée (20), et comprenant une unité de réglage et/ou de commande (28) qui sert au moins à commander l'unité de commutation par complémentarité de formes (15), **caractérisé en ce que** l'unité de réglage et/ou de commande (28) sert à commander dans un processus de fermeture de l'unité de commutation par complémentarité de formes (15) un point de contact (25) qui se situe dans une variation de vitesse différentielle (26) après un passage (27) d'une vitesse synchrone (29), la vitesse synchrone (29) correspondant à une vitesse nulle.

10. Groupe motopropulseur de véhicule automobile selon la revendication 9, **caractérisé par** une transmission (31) destinée à commuter des rapports de vitesse avant (V1-V9) qui présente l'unité de commutation par complémentarité de formes (15) conçue sous la forme de frein.
